(19)

**Europäisches Patentamt**
**European Patent Office**
**Office européen des brevets**

(11)  **EP 4 207 688 B1**

(12)  **EUROPEAN PATENT SPECIFICATION**

(45) Date of publication and mention
of the grant of the patent:
**31.12.2025  Bulletin 2026/01**

(21) Application number: **21913524.1**

(22) Date of filing: **15.11.2021**

(51) International Patent Classification (IPC):
*H04L 12/00* (2006.01)  *G06F 16/23* (2019.01)
*G06F 16/27* (2019.01)  *G06F 16/901* (2019.01)

(52) Cooperative Patent Classification (CPC):
**G06F 16/2358; G06F 16/273; G06F 16/9024**

(86) International application number:
**PCT/CN2021/130637**

(87) International publication number:
**WO 2022/142781 (07.07.2022 Gazette 2022/27)**

(54)  **ASYNCHRONOUS BOOKKEEPING METHOD AND APPARATUS FOR BLOCKCHAIN, MEDIUM, AND ELECTRONIC DEVICE**

ASYNCHRONES BUCHHALTUNGSVERFAHREN UND VORRICHTUNG FÜR BLOCKCHAIN, MEDIUM UND ELEKTRONISCHE VORRICHTUNG

PROCÉDÉ ET APPAREIL DE NETTOYAGE DE MISE EN SIGNET ASYNCHRONE POUR CHAÎNE DE BLOCS, SUPPORT ET DISPOSITIF ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **28.12.2020  CN 202011577543**

(43) Date of publication of application:
**05.07.2023  Bulletin 2023/27**

(73) Proprietor: **Tencent Technology (Shenzhen) Company Limited**
**Shenzhen, Guangdong, 518057 (CN)**

(72) Inventor: **LIU, Pan**
**Shenzhen, Guangdong 518057 (CN)**

(74) Representative: **Novagraaf International SA**
**Chemin de l'Echo 3**
**1213 Onex, Geneva (CH)**

(56) References cited:
CN-A- 108 804 112      CN-A- 110 135 178
CN-A- 110 659 988      CN-A- 110 995 776
CN-A- 112 291 372      US-A1- 2016 164 884
US-A1- 2017 132 615    US-A1- 2019 026 146

**Description**

FIELD OF THE TECHNOLOGY

The present disclosure relates to the technical field of computer and communications, and specifically, to asynchronous accounting in a blockchain.

BACKGROUND OF THE DISCLOSURE

After a block is verified through a consensus mechanism in a blockchain network, blockchain nodes need to write information of the block into a ledger. Generally, the nodes perform accounting by writing the block information serially into a disk or distributed storage. For example, a block header is first written into the disk or the distributed storage, and afterwards a list of transaction(s) and a set of results of executing the transaction(s) are written into the disk or the distributed storage. After the list and the result set have been written, a write set (WriteSet) is written into the disk or the distributed storage. After the write set has been written, the accounting of the nodes completes, and a new round of consensus begins for block production. Patent document with Publication No. CN 110995776 A discloses a method for distributing blocks in a blockchain system, where a block to be written into a disk is first buffered and then transferred into a queue.

SUMMARY

A method and an apparatus for asynchronous accounting in a blockchain, a medium, and an electronic device are provided according to embodiments of the present disclosure. An accounting delay of blocks can be reduced and a processing performance of a blockchain network can be improved at least to some extent.
Other features and advantages of the present disclosure would become apparent through following detailed descriptions, or be partially learned through practicing embodiments of the present disclosure.
The object of the invention is solved by the features of the independent claims. Further embodiments are the subject-matter of the dependent claims.
The foregoing general description and following detailed description are merely illustrative and explanatory, and are not intended for limiting the present disclosure.

BRIEF DESCRIPTION OF THE DRAWINGS

Figure 1 is a schematic structural diagram of a blockchain network.

Figure 2 is a schematic diagram of connection among blocks in a blockchain.

Figure 3 is a schematic diagram of a process for generating a block.

Figure 4 is a flowchart of a method for asynchronous accounting in a blockchain according to an embodiment of the present disclosure.

Figure 5 is a block diagram of an apparatus for asynchronous accounting in a blockchain according to an embodiment of the present disclosure.

Figure 6 is a schematic structural diagram of a computer system adapted to implement an electronic device according to an embodiment of the present disclosure.

DESCRIPTION OF EMBODIMENTS

Hereinafter embodiments are described more comprehensively with reference to the drawings. The embodiments may be implemented in various forms, and should not be construed as limited to examples described herein. Rather, the embodiments are provided to make the present disclosure more comprehensive and complete, and convey the concept of the present disclosure to those skilled in the art more thoroughly.
The features, structures, or characteristics described herein may be combined in one or more embodiments in any appropriate manner. Hereinafter more specific details are provided to provide a comprehensive understanding of the embodiments of the present disclosure. Those skilled in the art can appreciate that the technical solutions herein may be implemented without one or more of the specific details, or may be implemented by using another method, another unit, another apparatus, or another step. In other cases, well-known methods, apparatuses, implementations, or operations are not shown or described in detail to avoid obscuring aspects of the present disclosure.

Block diagrams shown in the drawings are merely functional entities and do not necessarily correspond to physically independent entities. That is, the functional entities may be implemented in software, in one or more hardware modules or integrated circuits, or in different networks and/or processor apparatuses and/or microcontroller apparatuses.

Flowcharts shown in the drawings are merely exemplary illustration, do not necessarily comprise all content and operations/steps, and are not necessarily performed based on the described orders. For example, some operations/steps may be further divided, or some operations/steps may be combined or partially combined. Therefore, an actual execution order may change according to an actual situation.

Herein the term "multiple" means two or more, and the term "and/or" describes association between associated objects and represents that three possible relationships. For example, "A and/or B" may represent: only A exists, both A and B exist, and only B exists. Generally, the symbol "/" indicates an "or" relationship between the associated objects.

A blockchain is a new mode which applies computer technology such as distributed data storage, point-to-point transmission, a consensus mechanism, and an encryption algorithm. The blockchain is essentially a decentralized database, and is a series of data blocks associated via a cryptographic means. Each data block includes information on a batch of network transactions, which is configured to check validity of the information (for anti-counterfeiting) and generating a next block. The blockchain may include a blockchain underlying platform, a platform-product service layer, and an application service layer.

The blockchain underlying platform may include processing modules for, for example, user management, basic service, intelligent contracts, and operation supervision. The user management module is responsible for managing identity information of all participants of a blockchain, including maintaining generation of public keys and private keys (account management), managing the keys, and maintaining a relationship between user's real identities and blockchain addresses (authority management), or the like. In case of being authorized, the user management module supervises and audits some real-identity transactions, and provides rule configurations on risk control (risk control audit). The basic service module is deployed on all blockchain node devices to check validity of a service request, and records a valid request onto storage after successful consensus. In case of a new service request, the basic service module first performs parsing and authentication that are adapted to an interface (interface adaptation), then encrypts service information through a consensus algorithm (consensus management), then transmits the new service request with completeness and consistency to a shared ledger the after encryption (network communication), and records and stores such service request. The smart contract module is responsible for registration, issuance, trigger, and execution of a contract. A developer may define contract logic through a programming language, publish the contract logic onto the blockchain (contract registration), invoke a key or another event to trigger the execution according to logic of a contract term, and complete the contract logic. The smart contract module further provides functions of upgrading and cancelling a contract. The operation monitoring module is mainly responsible for deployment, configuration modification, contract configuration, and cloud adaptation during product release, as well as visual output of real-time status during product operation. The visual output concern, for example, alarms, monitoring network conditions, and monitoring health of a node device.

The platform-product service layer provides basic capabilities and implementation frameworks for typical applications. Based on the basic capabilities, the developers may superimpose features of services to implement a blockchain of the service logic. The application service layer provides an application service based on a blockchain solution, such that a participant of the service can use the service.

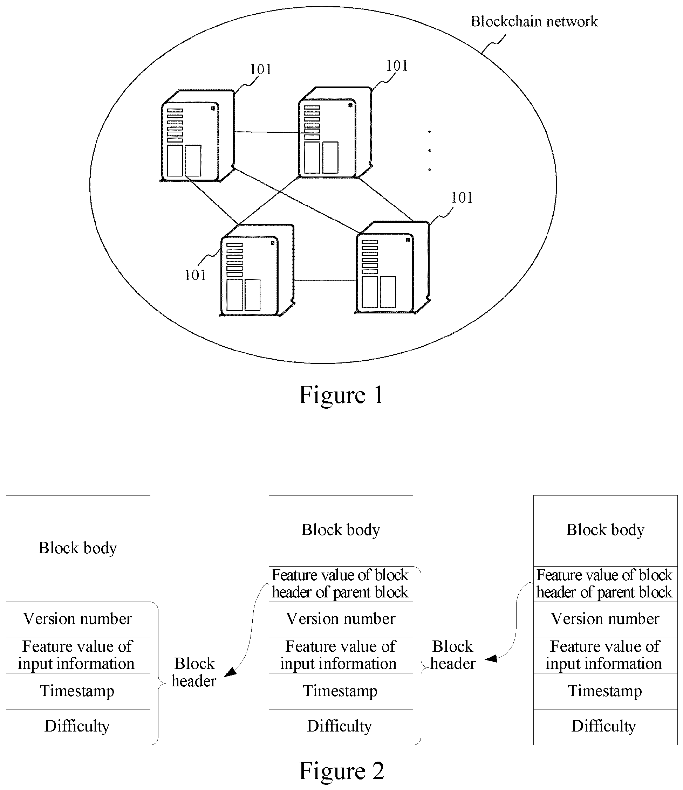

Reference is made to a blockchain network as shown in Figure 1. The blockchain network may comprise multiple nodes 101, and the multiple nodes 101 may be various clients forming the blockchain network. During normal operation, each node 101 may receive inputted information and maintain shared data in the blockchain network based on the inputted information. In order to ensure information exchange within the blockchain network, information connection may be provided among the nodes in the blockchain network, and the nodes are capable to transmit information via the information connection. For example, in a case that any node in the blockchain network receives inputted information, the other nodes in the blockchain network obtain the inputted information and store the inputted information as shared data according to a consensus algorithm. Thereby, data stored in all nodes is consistent in the blockchain network.

Each node in the blockchain system has a corresponding node identifier, and each node in the blockchain system can store the node identifiers of other nodes in the blockchain system, such that it may broadcast a generated block to other nodes in the blockchain system subsequently according to the node identifiers. Each node may maintain a node identifier list as shown in Table 1, and store the node names and the node identifiers correspondingly in the node identifier list. The node identifier may be an Internet Protocol (IP) address and any other type of information capable of identifying a node.

Each node in the blockchain system stores the same blockchain. Reference is made to Figure 2. The blockchain comprises multiple blocks. A genesis block comprises a block header and a block body, the block header stores a feature value of input information, a version number, a timestamp, and a difficulty value, and the block body stores the input information. Similarly, a next block also comprises a block header and a block body, and the block header stores a feature value of input information of the current block, a feature value of the block header of a parent block, a version number, a timestamp, and a difficulty value. The other blocks can be deduced by analogy. Thereby, data stored in each block of the blockchain is associated with the data stored in its parent block, which ensures security of information inputted into the blocks.

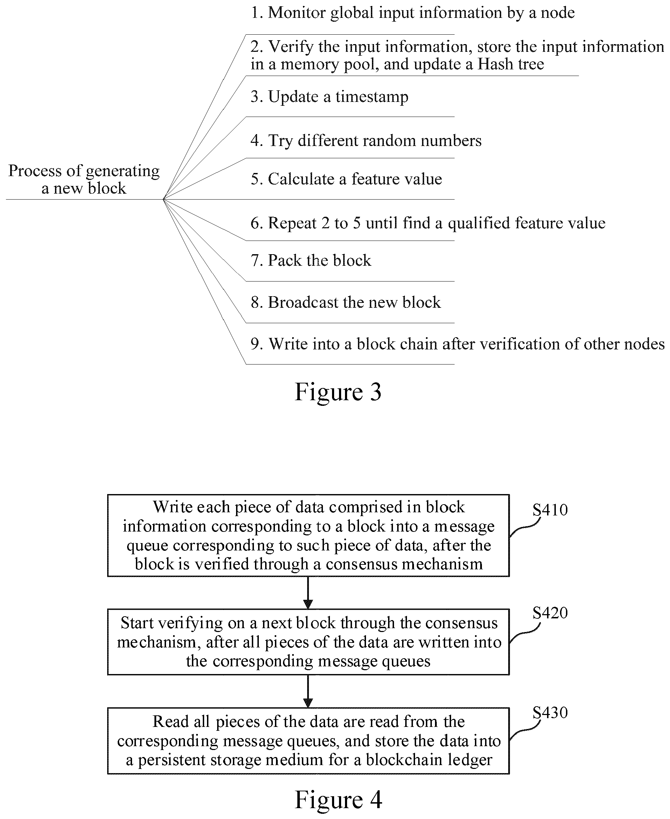

Reference is made to Figure 3. When generating a block in the blockchain, a node in which the blockchain is located receives and verifies input information, then stores the input information into a memory pool, and update a hash tree which is of the block and is configured to record the input information. Afterwards, the timestamp is updated to be a moment when the input information is received. Different random numbers are tried to calculate different feature values, until the calculated feature value satisfies the following condition:

$$SHA256\left(SHA256\left(version + prev\_hash + merkle\_root + ntime + nbits + x\right)\right) < TARGET.$$

$SHA256$ is an algorithm used for calculating the feature value, $version$ (i.e., a version number) carries version information of a relevant block protocol in the blockchain, $prev\_hash$ represents a feature value of the block header of the parent block of a current block, merkle_root represents a feature value of input information, $ntime$ represents a moment at which the timestamp is updated, $nbits$ represents a current difficulty, which is constant within a time period and is refreshed after exceeding the time period, x is the random number, $TARGET$ represents a threshold of the feature value, and the threshold may be determined according to $nbits$.

Thereby, when the random umber satisfying the above condition is determined through calculation, the information may be correspondingly stored, and a block header and a block body are generated to obtain the current block. Subsequently, the node at which the blockchain is located transmits the newly generated block respectively to other nodes in the blockchain system, in which the node is located, according to node identifiers of these nodes. The other nodes verify the newly generated block, and add the newly generated block into the blockchain stored thereon after the verification is successful.

Each node in the blockchain network may be a server, or may be a terminal device. The server may be an independent physical server, may be a server cluster or a distributed system formed by multiple physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an AI platform. The terminal device may be, but is not limited to, a smartphone, a tablet computer, a notebook computer, a desktop computer, a smart speaker, a smart watch, or the like. Each node may be directly or indirectly connected via wired or wireless communication, which is not limited herein.

The foregoing cloud computing refers to a mode of delivering and using IT infrastructure, and specifically refers to obtaining required resources via a network in a manner based on demands and easy to expand. Cloud computing in a broad sense is a mode of delivering and using services, and refers to obtaining required services via a network in a manner based on demands and easy to expand. Such services may be relate to IT, software, and the Internet, or may be other services. The cloud computing is a product of developing and fusing traditional computer and network techniques such as grid computing, distributed computing, parallel computing, utility computing, network storage technologies, virtualization, load balancing. The cloud computing grows rapidly with development of Internet, real-time data streaming, diversity of connection devices, and demands for searching service, social network, mobile commerce, and open collaboration. Different from traditional parallel distributed computing, the cloud computing promotes revolutionary changes in models of the entire Internet and enterprise management.

After the block is verified through a consensus mechanism in the blockchain network, blockchain nodes needs to write information concerning the block into a ledger (i.e., performs accounting). The block information comprises a block and an execution result of the block. The block comprises a block header and a list of transaction(s), and the execution result comprises a set of result(s) of executing the transaction(s) and a write set (WriteSet).

Generally, the nodes perform the accounting by writing the block information serially into a disk or distributed storage. For example, the block header is first written into the disk or the distributed storage, and afterwards the list of the transaction(s) and the set of result(s) of executing the transaction(s) are written into the disk or the distributed storage. After the list and the result set have been written, the write set (WriteSet) is written into the disk or the distributed storage. After the write set has been written, the accounting of the nodes completes, and a new round of consensus begins for block production. Such scheme of block accounting adopts a serial manner in general, and its performance depends heavily on I/O resources, which results in a large delay during each round of block accounting.

In view of the above, a novel solution for asynchronous accounting in a blockchain is provided according to embodiments of the present disclosure. Hereinafter details of technical solutions in the embodiments of the present disclosure are illustrated.

Figure 4 is a flowchart of a method for asynchronous accounting in a blockchain according to an embodiment of the present disclosure. The method is executable by any consensus node in a blockchain network. Reference is made to Figure 4, in which the method comprises at least steps S410 to S430, of which details are described as follows.

In step S410, each piece of data comprised in block information corresponding to a block is written into a message queue corresponding to such piece of the data, after the block is verified through a consensus mechanism.

In an embodiment, a respective message queue may be provided for each piece of the data comprised in the block information. The message queue is configured to store data which needs to be processed into a persistent data form.

In an embodiment, a respective cache may be further provided for each piece of the data. The cache provides a following function. Through referring to the data stored in the cache, a response to a service request such as a query request is enabled before the data persistence processing on the block information completes.

In an embodiment, pieces of the data comprised in the block information may comprise a block header, transaction data, and a write set. The block header stores header information of the block, and carries a hash of a previous block (PreHash), a hash of the current block (Hash), a timestamp, and the like. The transaction data comprises a list of information on transaction(s) and a message concerning a result of executing the transaction(s). The write set comprise a value of a variable, which is pre-written by an endorsement node when pre-executing the transaction(s). That is, the writing on the variable is only recorded in the write set, and does not affect a global status of the variable. Records in the write set also adopt the form of key-value pairs.

On a basis of the pieces of the data comprised in the block information in the above embodiments, the block header may be written into a queue and a cache which correspond to the block header, the transaction data may be written into a queue and a cache which correspond to the transaction data, and the write set may be written into a queue and a cache which correspond to the write set.

In an embodiment, the block header comprised in the block information may be written into the corresponding cache by using a block height as a key and block header data as a value.

In an embodiment, the transaction data comprised in the block information may be written into the corresponding cache by using the transaction hash as a key and the transaction data as a value.

In an embodiment, the write set comprised in the block information may be written into the corresponding cache by using a table name and an index as a key and written data as a value.

Reference is further made to Figure 4. In step S420, verification on a next block through the consensus mechanism is started, after all pieces of the data are written into the corresponding message queues.

In an embodiment, all consensus nodes in the blockchain network may start a next round of block consensus process, after the pieces of the data comprised in the block information are respectively written into the corresponding message queue, or after the pieces of the data comprised in the block information are respectively written into the corresponding message queue and the corresponding cache. It is not necessary to wait completion of the data persistence processing on the block information before starting the next round of consensus process. Thereby, consensus performances of the blockchain network are effectively improved.

Reference is further made to Figure 4. In step S430, all pieces of the data are read from the corresponding message queues, and are stored into a persistent (non-volatile) storage medium (i.e., subject to data persistence processing) for a blockchain ledger.

In an embodiment, the message queues corresponding to all pieces of the data may be monitored. One of these message queues is a target message queue. In a case that the target message queue is monitored as comprising data, the data is sequentially read from the target message queue for the data persistence processing. The target message queue refers to a message queue, which comprises the data, among the message queues corresponding to all pieces of the data in the block information. Optionally, a monitoring task may be activated each message queue, and the message queues corresponding to all pieces of data are monitored through the monitoring tasks.

In an embodiment of the present disclosure, the data are sequentially read from the target message queue for the data persistence processing in a following manner. An interface of a storage layer is invoked to perform the data persistence processing on the data sequentially read from the target message queue. In a case that the data persistence processing fails, the interface of the storage layer is repeatedly invoked to perform the data persistence processing on the data read from the target message queue, until the data persistence processing succeeds.

In an embodiment, after the pieces of the data corresponding to a target block are subject to the data persistence processing, the pieces of the data corresponding to the target block may be deleted from the cache. Thereby, it can be ensured that the cache is timely cleared to release a storage space in the cache, after the pieces of the data corresponding to the block has been processed into the persistent data form.

On a basis of what is shown in Figure 4, in an embodiment, after a block is verified through the consensus mechanism, such block and an execution result of such block is first written into a log. A target block and its execution result, which are comprised in the log, are deleted from the log after the pieces of the data corresponding to the target block are subject to the data persistence processing. Thereby, the block which is verified through the consensus mechanism and its execution result can be temporarily stored in the log, which enables the blockchain nodes to determine based on the log whether there is block information that has not been processed into the persistent data form. It is ensured that the block height maintained is consistent among the blockchain nodes.

In an embodiment, on a basis of the above log, a block and its execution result which are comprised in the log are obtained after a blockchain node is restarted. Then, the data in the block information corresponding to the block and the execution result, which are obtained from the log, is processed into the persistent data form. Thereby, the restarted blockchain node can read the log to ensure integrity of the block information stored in such node.

In an embodiment, after a block is verified through the consensus mechanism in the blockchain network, the block and its execution result are first written into the log. After the writing is successful, the pieces of the data comprises in the block information corresponding to the block are written into the corresponding message queues, or additionally into the corresponding caches. That is, writing into the log has higher priority, and the pieces of the data comprised in the block information are not written into the corresponding message queues, or additionally into the corresponding caches, until they are successfully written into the log. In addition, in an embodiment, writing the block and its block execution result into the log is repeated in a case the writing fails. In a case that the writing keeps failing for a set quantity of repetitions, the accounting on the block is stopped, and an alert message is transmitted.

In an embodiment, after a block is verified through the consensus mechanism in the blockchain network, the block and its execution result are written into the log while the pieces of the data comprised in the block information corresponding to the block are being written into the corresponding message queues and the corresponding caches. Alternatively, writing into the message queues and the caches may be prior to writing into the log. The writing may be repeated in case of failing, and an alarm is issued in a case of a quantity of repetitions reaches a threshold.

Hereinafter a specific embodiment is provided to illustrate details of an implementation of the present disclosure.

In an embodiment, a log-managing component may be provided. The log-managing component is substantially configured to prevent that ledger data of a node is inconsistent with that of the other nodes, when the node is restarted and performs accounting again. Specifically, the log-managing component saves several newest blocks which have been verified through the consensus mechanism and execution results of these blocks. After the node is restarted, a ledger module first reads the blocks and the execution results from the log-managing component, and then rewrites the read data into a disk or a distributed storage, so as to ensure that data is complete at the node and a data status is consistent with other nodes for the same block height. Moreover, the blocks and the execution results stored in the log-managing component would be deleted. Specifically, after the node processes relevant data of a certain block into the persistent data form, such block and the execution result thereof may be deleted from the log-managing component.

In an embodiment, three different queue components may be provided. One is a block queue configured to store block header data, another is a transaction queue configured to storing transaction data (that is, a list of information of transaction(s) and a result of executing the transaction(s)), and a third a write-set queue configured to store a write set. Additionally, three tasks are introduced. One is a persist block job configured to monitor in real time whether data is written into the block queue, another is a persist transaction job configured to monitor in real time whether data is written into the transaction queue, and a third is a persist writeset job configured to monitor in real time whether data is written into the writeset queue.

In an embodiment, a cache-managing component may be further provided. The cache-managing component caches and erases the block header data into/from a block cache, the transaction data into/from a transaction cache, and the write-set data into/from a writeset cache. Caching in the block cache adopts a block height as the key and the block header data as the value. Caching in the transaction cache adopts a transaction hash as the key and the transaction data as the value. Caching in the writeset cache adopts a table name and an index as the key and written data as the value.

In an embodiment, when the ledger module is invoked to write data of a new block, the block and its block execution result are first written into the log-managing component. In a case that writing into the log-managing component fails, the ledger module decides whether to retry the writing according to a cause of the failure. In a case that the retries reaches a certain quantity, the ledger module terminates the accounting on the block, and notify relevant maintenance personnel to check and repair.

In an embodiment, after the ledger module writes the data of the block into the log-managing component, the block header, the transaction data (that is, the list of the information of the transaction(s) and the result of executing the transaction(s)), and the write set are simultaneously written under a concurrent execution logic. Specifically, when writing the block header data, a block header message is generated and written into the block queue according to specifications (such as a format requirement) of the block queue, and then written into the block cache according to a requirement of the block cache. Similarly, when writing the transaction data, a transaction-list message is generated and written into the transaction queue according to specifications of the transaction queue, and then written into the transaction cache according to a requirement of the transaction cache. Similarly, when writing the write set, the write set is written into the writeset queue according to specifications of the writeset queue, and then written into the writeset cache. After the above three types of data are written into the respective queues and the respective caches, the current accounting can be regarded as finished, and a next round of block consensus can be started at such time. Since the three types of data are written concurrently, a delay in the accounting is subject to a writing delay of a certain type of data, which reduces the accounting delay greatly.

For the data persistence processing of the ledger data, the foregoing three real-time tasks monitor the three queues, respectively. The persist block job monitors whether a block header message needs to be written into a storage from the block queue, the persist transaction job monitors whether a piece of transaction data needs to be written into the storage from the transaction queue, and the persist writeset job monitors whether a piece of write-set data needs to be written into the storage from the writeset queue.

In a case that the task of the persist block job monitors that block header data needs to be written into a storage from the block queue, the block header data is sequentially read from the block queue. Since the block header data is placed into the block queue in an order based on the block height, the block header data read by such task is correspondingly ordered based on the block height, and additional sorting is not necessary. In response to the task reading the block header data, an interface of a storage layer is invoked to process the block data into the persistent data form. Similarly, in a case that the task of the persist transaction job monitors that transaction data needs to be written into the storage from the transaction queue, the transaction data is sequentially read from the transaction queue. In response to the task reading the transaction data, the interface is invoked to process the block data into the persistent data form. In a case that the task of the persist writeset job monitors that write-set data needs to be written into the storage from the writeset queue, the write-set data is sequentially read from the writeset queue. In response to the task reading the write-set data, the interface is invoked to process the block data into the persistent data form.

The foregoing three tasks should ensure that a process of invoking the interface of the storage layer to perform the data persistence processing has a normal response. In a case that an attempt to perform the data persistence processing fails, the interface is invoked again. The re-invoking operation is idempotent on the data. No matter how many times the invoking is attempted, the finally stored data is consistent with data subject to the data persistence processing of the first time.

In an embodiment, after data related to a certain block has been processed into the persistent data form, such block and its execution result can be deleted from the log-managing component, such that data stored in the log-managing component can be timely cleared. In addition, after data related to a certain block has been processed into the persistent data form, the pieces of data corresponding to such block can be deleted from the cache(s), such that the block header data in the block cache, the transaction data in the transaction cache, and the write set data in the writeset cache can be timely cleared.

In the technical solutions according to the foregoing embodiments, the pieces of the data comprised in the block information are processed in parallel, which reduces a delay in the accounting on the block. Moreover, the next round of block consensus can be started as long as the data has been written into the message queues, and it is not necessary to wait the data persistence on the pieces of the data in the block, which improves a throughput of a blockchain network. Thereby, a processing performance of the blockchain network is effectively improved.

Hereinafter apparatus embodiments of the present disclosure are illustrated, and apparatuses are configured to perform the method for asynchronous accounting in a blockchain in the foregoing embodiments. Details not disclosed in the apparatus embodiments may refer to the foregoing method embodiments.

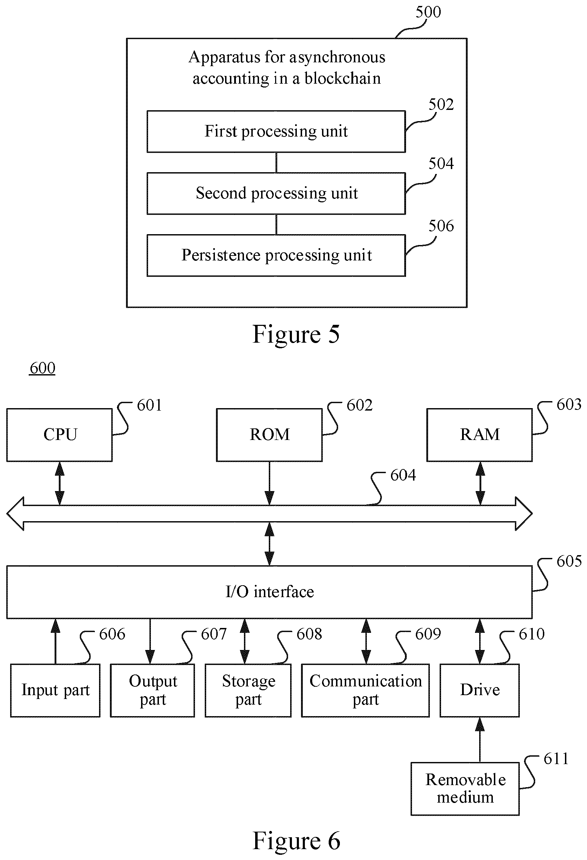

Figure 5 is a block diagram of an apparatus for asynchronous accounting in a blockchain according to an embodiment of the present disclosure. The apparatus for asynchronous accounting in a blockchain may be set in any consensus node in the blockchain network.

Reference is made to Figure 5. In an embodiment, an apparatus 500 for asynchronous accounting in a blockchain comprises a first processing unit 502, a second processing unit 504, and a persistence processing unit 506.

The first processing unit 502 is configured to write each piece of data comprised in block information corresponding to a block into a message queue corresponding to such piece of the data, after the block is verified through a consensus mechanism. The second processing unit 504 is configured to start verifying a next block through the consensus mechanism after all pieces of the data are written into the corresponding message queues. The persistence processing unit 506 is configured to read all pieces of the data from the corresponding message queues, and store the data into a persistent storage medium for a blockchain ledger.

On such basis, in some embodiments, the first processing unit is further configured to write each piece of the data comprised in the block information corresponding to the block into the corresponding message queue and into a cache corresponding to such piece of the data.

On such basis, in some embodiments, the first processing unit 502 is further configured to: write the block and an execution result of the block into a log, after the block is verified through the consensus mechanism; and for a target block in the log, delete the target block and an execution result of the target block from the log, after all pieces of the data corresponding to the target block are processed into the persistent data form.

On such basis, in some embodiments, the first processing unit 502 is further configured to: obtain the block and the execution result of the block, which are comprised in the log, after the consensus node is restarted; and process the data in the block information corresponding to the block and the execution result, which are obtained from the log, into the persistent data form.

On such basis, in some embodiments, the first processing unit 502 is configured to write each piece of the data comprised in the block information corresponding to the block into the corresponding message queue, after the block and the execution result of the block are successfully written into the log.

On such basis, in some embodiments, the first processing unit 502 is further configured to: repeat writing the block and the execution result of the block into the log, in response to writing the block and the execution result into the log failing; and stop accounting on the block and transmit an alert message, in response to the writing the block and the execution result into the log failing for a set quantity of repetitions.

On such basis, in some embodiments, the second processing unit 504 is further configured to delete all pieces of the data corresponding to the target block from the cache, after all pieces of the data are processed into the persistent data form.

On such basis, in some embodiments, the first processing unit 502 is configured to: write a block header comprised in the block information into a queue and a cache which corresponds to the block header, write transaction data comprised in the block information into a queue and a cache which correspond to the transaction data, write a write set comprised in the block information into a queue and a cache which correspond to the write set. The transaction data comprises a list of information of transaction(s) and a result of executing the transaction(s).

On such basis, in some embodiments, the data comprised in the block information comprises the block header, the transaction data, and the write set. The first processing unit 502 is configured to: write the block header into the cache corresponding to the block header by using a block height as a key and block header data as a value; write the transaction data into the cache corresponding to the transaction data by using a transaction hash as a key and the transaction data as a value; and write the write set in the block information into the cache corresponding to the write set by using a table name and an index as a key and written data as a value.

On such basis, in some embodiments, the persistence processing unit 506 is configured to: monitor the corresponding message queues of all pieces of the data, where a target message queue is one of the message queues; and read the data in the target message queue sequentially from the target message queue and process the read data into the persistent data form, in response to the target message queue being monitored as comprising a piece of the data.

On such basis, in some embodiments, the persistence processing unit 506 is configured to: invoke an interface of a storage layer to process the data, which is sequentially read from the target message queue, into the persistent data form; and repeat invoking the interface to process the data sequentially read from the target message queue into the persistent data form, in response to storing the data sequentially read from the target message queue into the persistent storage medium failing, until the processing succeeds.

On such basis, in some embodiments, the persistence processing unit 506 is configured to activate a monitoring task for the message queue; and monitor the message queue corresponding to each piece of the data through the monitoring task.

On such basis, in some embodiments, the second processing unit is further configured to: respond to a service request by referring to data stored in the cache, before storing the data comprised in the block information into the persistent storage medium completes.

Figure 6 is a schematic structural diagram of a computer system adapted to implement an electronic device according to an embodiment of the present disclosure.

The computer system 600 of the electronic device as shown in Figure 6 is merely an example, and does not constitute any limitation on functions or applications of embodiments of the present disclosure.

As shown in Figure 6, the computer system 600 comprises a central processing unit (CPU) 601 capable to perform various appropriate actions and processing, for example, perform the method according foregoing embodiments, according to a program stored in a read-only memory (ROM) 602 or a program loaded into a random-access memory (RAM) 603 from a storage component 608. The RAM 603 further stores various programs and data required for system operations. The CPU 601, the ROM 602, and the RAM 603 are connected to each other via a bus 604. An input/output (I/O) interface 605 is coupled to the bus 604.

Components connected to the I/O interface 605 includes: an input component 606, including a keyboard, a mouse, or the like; an output component 607, including a cathode ray tube (CRT), a liquid crystal display (LCD), a speaker, and the like; the storage component1308, including a hard disk or the like; and a communication component 609, including a network interface card such as an LAN card or a modem. The communication component 609 performs communication via a network such as the Internet. A driver 610 is further coupled to the I/O interface 605 on requirements. A removable medium 66, such as a magnetic disk, an optical disc, a magneto-optical disk, or a semiconductor memory, is installed on the drive 610 on requirement, so that a computer program read from the removable medium can be installed on the storage component 608 on requirement.

Particularly, according to an embodiment of the present disclosure, the foregoing processes described with reference to the flowcharts may be implemented as computer software programs. A computer program product is provided according to an embodiment of the present disclosure. The computer program product includes a computer program stored in a computer-readable medium. The computer program includes program codes for performing the method as shown in the flowcharts. In such embodiment, the computer program may be downloaded and installed from the network via the communication portion 609, and/or installed from the removable medium 611. When the computer program is executed by the CPU 601, various functions defined in the method and the apparatus according to embodiments of the present disclosure are implemented.

The computer-readable medium according to embodiments the present disclosure may be a computer-readable signal medium, a computer-readable storage medium, or any combination of the two. For example, the computer-readable storage medium may be, but is not limited to, an electric/magnetic/optical/electromagnetic/infrared/semi-conductor system/apparatus/component, or any combination of the above forms. A more specific example of the computer-readable storage medium may include, but is not limited to, an electrical connection having one or more wires, a portable computer magnetic disk, a hard disk, a random-access memory (RAM), a read-only memory (ROM), an erasable programmable read-only memory (EPROM or a flash memory), an optical fiber, a compact disk read-only memory (CD-ROM), an optical storage device, a magnetic storage device, or any appropriate combination of the above forms. Herein the computer-readable storage medium may be any tangible medium containing or storing a program, and the program may be used by, or in combination with, an instruction executing system/apparatus/device. Herein the computer-readable signal medium may include a data signal transmitted in a baseband or propagating as a part of a carrier wave, and the data signal carries computer-readable program codes. The propagating data signal may be various forms, which include but is not limited to an electromagnetic signal, an optical signal, or any suitable combination of the two. The computer-readable signal medium may be any computer-readable medium other than the computer-readable storage medium. The computer-readable medium may send, carry, or transmit a program, and the program is used by or in combination with an instruction executing system/apparatus/device. The program codes contained in the computer-readable medium may be transmitted via any appropriate medium, which includes but is not limited to: a wireless medium, a wire, an optical cable, radio frequency, any suitable combination of the above forms, or the like.

The flowcharts and block diagrams in the drawings illustrate feasible system architecture, functions, and operations that may be implemented by a system, a method, and a computer program product according to various embodiments of the present disclosure. In this regard, each box in a flowchart or a block diagram may represent a module, a program segment, or a part of codes. The module, the program segment, or the part of codes includes one or more executable instructions configured to implement a designated logic function. In some alternative embodiments, functions as annotations in the boxes may be implemented in a sequence different from that as shown in the drawings. For example, in practice, two boxes shown in succession may be performed substantially simultaneously, and sometimes may be performed in a reverse sequence, which is determined by related functions. Each block/box and a combination of block/boxes in a block diagram and/or a flowchart may be implemented through a dedicated hardware-based system, which is configured to achieve a specified function or operation, or may be implemented through a combination of dedicated hardware and computer instructions.

Units described herein may be implemented in software, may be implemented in hardware, and may be arranged in a processor. Names of the units do not constitute a limitation on them in some situations.

In another aspect, a computer readable medium is provided according to embodiments of the present disclosure. The computer readable medium may be comprised in the electronic device as described in the foregoing embodiments, or may exist alone without being assembled into an electronic device. The computer-readable medium carries one or more programs, and the one or more programs when executed by an electronic device configure the electronic device to implement the method described in the foregoing embodiments.

Although multiple modules or multiple units of a device configured to perform actions are discussed in the foregoing detailed description, such division is not mandatory. Actually, according to implementations of the present disclosure, the features and functions of two or more modules or units as described above may be implemented in one module or one unit. Conversely, features and functions of one module or one unit as described above may be divided into multiple modules or multiple units in an implementation.

Description of the foregoing embodiments facilitates those skilled in the art would easily understanding that the exemplary implementations described herein may be implemented through software, or software in combination with necessary hardware. Therefore, technical solutions in embodiments of the present disclosure may be implemented as a software product. The software product may be stored in a non-volatile storage medium (which may be a CD-ROM, a USB flash drive, a removable hard disk, or the like) or in the network, comprise several instructions for instructing a computing device (which may be a personal computer, a server, a touch terminal, a network device, or the like) to perform the method according to the foregoing embodiments of the present disclosure.

Those skilled in the art that read the specification and practice the disclosed implementations would easily reach other implementations of the present disclosure.

The present disclosure is not limited to precise structures as described above and a shown in the drawings. Various modifications and changes can be made without departing from the scope of the present disclosure. The scope of the present disclosure is only limited by the appended claims.

## Claims

1. A method for asynchronous accounting in a blockchain, executable by a consensus node in the blockchain, wherein the method comprises:

   writing (S410), after a block is verified through a consensus mechanism, each piece of data comprised in block information corresponding to the block into a message queue corresponding to said piece of the data;
   starting (S420) verifying a next block through the consensus mechanism after writing all pieces of the data into the corresponding message queues; and
   reading (S430) all pieces of the data from the corresponding message queues, and storing the data into a persistent storage medium for a blockchain ledger;
   wherein the method further comprises:

   writing the block and an execution result of the block into a log, after the block is verified through the consensus mechanism; and
   for a target block in the log, deleting the target block and an execution result of the target block from the log, after all pieces of the data corresponding to the target block are processed into the persistent data form; and wherein

   the method further comprises: obtaining the block and the execution result of the block, which are comprised in the log, after the consensus node is restarted; and processing the data in the block information corresponding to the block and the execution result, which are obtained from the log, into the persistent data form; and
   writing each piece of the data comprised in the block information corresponding to the block into the message queue corresponding to said piece of the data comprises: writing each piece of the data comprised in the block information corresponding to the block into the corresponding message queue, after the block and the execution result of the block are successfully written into the log.

2. The method according to claim 1, further comprising:
   writing each piece of the data comprised in the block information corresponding to the block into a cache corresponding to said piece of the data.

3. The method according to claim 1, wherein further comprising:

   repeating writing the block and the execution result of the block into the log, in response to writing the block and the execution result into the log failing; and
   stopping accounting on the block and transmitting an alert message, in response to the writing the block and the execution result into the log failing for a set quantity of repetitions.

4. The method according to claim 2, further comprising:
   deleting all pieces of the data corresponding to the block from the cache, after all pieces of the data are processed into the persistent data form.

5. The method according to claim 2, wherein writing each piece of the data comprised in the block information corresponding to the block into the message queue corresponding to said piece of the data and writing each piece of the data comprised in the block information corresponding to the block into the cache corresponding to said piece of the data comprises:

   writing a block header comprised in the block information into a queue and a cache which corresponds to the block header;
   writing transaction data comprised in the block information into a queue and a cache which correspond to the transaction data; and
   writing a write set comprised in the block information into a queue and a cache which correspond to the write set;
   wherein the transaction data comprises a list of information of a transaction and a result of executing the transaction.

6. The method according to claim 2, wherein the data comprised in the block information comprises a block header, transaction data, and a write set; and
   writing each piece of the data comprised in the block information corresponding to the block into the cache corresponding to said piece of the data comprises:

> writing the block header into a cache corresponding to the block header by using a block height as a key and block header data as a value;
> writing the transaction data into a cache corresponding to the transaction data by using a transaction hash as a key and the transaction data as a value; and
> writing the write set into a cache corresponding to the write set by using a table name and an index as a key and written data as a value.

7. The method according to claim 1, wherein writing each piece of the data comprised in the block information corresponding to the block into the message queue corresponding to said piece of the data comprises:

> monitoring the corresponding message queues of all pieces of the data, wherein a target message queue is one of the message queues; and
> reading the data in the target message queue sequentially from the target message queue and processing the read data into the persistent data form, in response to the target message queue being monitored as comprising a piece of the data.

8. The method according to claim 7, wherein reading the data in the target message queue sequentially from the target message queue and storing the read data into the persistent storage medium comprises:

> invoking an interface of a storage layer to process the data, which is sequentially read from the target message queue, into the persistent data form; and
> repeating invoking the interface to process the data sequentially read from the target message queue into the persistent data form, in response to storing the data sequentially read from the target message queue into the persistent storage medium failing, until the data sequentially read from the target message queue is successfully processed into the persistent data form.

9. The method according to claim 7, wherein monitoring the corresponding message queues of all pieces of the data comprises:

> activating a monitoring task for the message queue; and
> monitoring the message queue corresponding to each piece of the data through the monitoring task.

10. The method according to claim 2, further comprising:
responding to a service request by referring to data stored in the cache, before storing the data comprised in the block information into the persistent storage medium completes.

11. A computer-readable medium, storing a computer program, wherein:
the computer program when executed by a processor implements the method according to any one of claims 1 to 10.

12. An electronic device, comprising:

> one or more processors; and
> a storage apparatus, configured to store one or more programs, wherein:
> the one or more programs when executed by the one or more processors configured the one or more processors to implement the method according to any one of claims 1 to 10.

**Patentansprüche**

1. Verfahren für eine asynchrone Buchhaltung in einer Blockkette, die durch einen Konsensknoten in der Blockkette ausführbar ist, wobei das Verfahren Folgendes umfasst:

> Schreiben (S410) von jedem Datenelement, das in Blockinformationen umfasst ist, die einem Block entsprechen, in eine Nachrichtenwarteschlange, die dem Datenelement entspricht, nachdem der Block über einen Konsensmechanismus verifiziert wurde;
> Starten (S420) des Verifizierens eines nächsten Blocks über den Konsensmechanismus, nachdem alle Datenelemente in die entsprechenden Nachrichtenwarteschlangen geschrieben wurden; und

Lesen (S430) von allen Datenelementen in den entsprechenden Nachrichtenwarteschlangen und Speichern der Daten in einem persistenten Speichermedium für ein Blockkettenhauptbuch;

wobei das Verfahren ferner Folgendes umfasst:

Schreiben des Blocks und eines Ausführungsergebnisses des Blocks in ein Protokoll, nachdem der Block über den Konsensmechanismus verifiziert wurde; und

für einen Zielblock im Protokoll Löschen des Zielblocks und eines Ausführungsergebnisses des Zielblocks aus dem Protokoll, nachdem alle Datenelemente, die dem Zielblock entsprechen, zur persistenten Datenform verarbeitet wurden; und

wobei das Verfahren ferner Folgendes umfasst:

Erhalten des Blocks und des Ausführungsergebnisses des Blocks, die im Protokoll umfasst sind, nachdem der Konsensknoten neu gestartet wurde; und Verarbeiten der Daten in den Blockinformationen, die dem Block entsprechen, und des Ausführungsergebnisses, die aus dem Protokoll erhalten werden, zur persistenten Datenform; und

Schreiben von jedem Datenelement, das in den Blockinformationen umfasst ist, die dem Block entsprechen, in die Nachrichtenwarteschlange, die dem Datenelement entspricht, umfasst: Schreiben von jedem Datenelement, das in den Blockinformationen umfasste ist, die dem Block entsprechen, in die entsprechende Nachrichtenwarteschlange, nachdem der Block und das Ausführungsergebnis des Blocks erfolgreich in das Protokoll geschrieben wurden.

2. Verfahren nach Anspruch 1, das ferner Folgendes umfasst:
Schreiben von jedem Datenelement, das in den Blockinformationen umfasst ist, die dem Block entsprechen, in einen Cache, der dem Datenelement entspricht.

3. Verfahren nach Anspruch 1, wobei das ferner Folgendes umfasst:

Wiederholen des Schreibens des Blocks und des Ausführungsergebnisses des Blocks in das Protokoll in Reaktion darauf, dass das Schreiben des Blocks und des Ausführungsergebnisses in das Protokoll fehlgeschlagen ist; und

Beenden der Buchhaltung im Block und Übertragen einer Warnnachricht in Reaktion darauf, dass das Schreiben des Blocks und des Ausführungsergebnisses in das Protokoll für eine eingestellte Menge von Wiederholungen fehlgeschlagen ist.

4. Verfahren nach Anspruch 2, das ferner Folgendes umfasst:
Löschen von allen Datenelementen, die dem Block entsprechen, aus dem Cache, nachdem alle Datenelemente zur persistenten Datenform verarbeitet wurden.

5. Verfahren nach Anspruch 2, wobei das Schreiben von jedem Datenelement, das in den Blockinformationen umfasst ist, die dem Block entsprechen, in die Nachrichtenwarteschlange, die dem Datenelement entspricht, und das Schreiben von jedem Datenelement, das in den Blockinformationen umfasst ist, die dem Block entsprechen, in den Cache, der dem Datenelement entspricht, Folgendes umfasst:

Schreiben eines Blockheaders, der in den Blockinformationen umfasst ist, in eine Warteschlange und einen Cache, der dem Blockheader entspricht;

Schreiben von Transaktionsdaten, die in den Blockinformationen umfasst sind, in eine Warteschlange und einen Cache, der den Transaktionsdaten entspricht; und

Schreiben eines Schreibsatzes, der in den Blockinformationen umfasst ist, in eine Warteschlange und einen Cache, die dem Schreibsatz entsprechen;

wobei die Transaktionsdaten eine Liste von Informationen einer Transaktion und ein Ergebnis einer Ausführung der Transaktion umfassen.

6. Verfahren nach Anspruch 2, wobei die in den Blockinformationen umfassten Daten einen Blockheader, Transaktionsdaten und einen Schreibsatz umfassen; und

das Schreiben von jedem Datenelement, das in den Blockinformationen umfasst ist, die dem Block entsprechen, in den Cache, der dem Datenelement entspricht, umfasst Folgendes:

Schreiben des Blockheaders in einen Cache, der dem Blockheader entspricht, durch Verwenden einer Blockhöhe als einen Schlüssel und von Blockheaderdaten als einen Wert;
Schreiben der Transaktionsdaten in einen Cache, der den Transaktionsdaten entspricht, durch Verwenden eines Transaktionshash als einen Schlüssel und der Transaktionsdaten als einen Wert; und
Schreiben des Schreibsatzes in einen Cache, der dem Schreibsatz entspricht, durch Verwenden eines Tabellennamens und eines Index als einen Schlüssel und von geschriebenen Daten als einen Wert.

7. Verfahren nach Anspruch 1, wobei das Schreiben von jedem Datenelement, das in den Blockinformationen umfasst ist, die dem Block entsprechen, in die Nachrichtenwarteschlange, die dem Datenelement entspricht, Folgendes umfasst:

Überwachen der entsprechenden Nachrichtenwarteschlangen von allen Datenelementen, wobei eine Zielnachrichtenwarteschlange eine der Nachrichtenwarteschlangen ist; und
sequenzielles Lesen der Daten in der Zielnachrichtenwarteschlange aus der Zielnachrichtenwarteschlange und Verarbeiten der gelesenen Daten zur persistenten Datenform in Reaktion darauf, dass die Zielnachrichtenwarteschlange als ein Datenelement umfassend überwacht wird.

8. Verfahren nach Anspruch 7, wobei das sequenzielle Lesen der Daten in der Zielnachrichtenwarteschlange aus der Zielnachrichtenwarteschlange und das Speichern der gelesenen Daten im persistenten Speichermedium Folgendes umfasst:

Aufrufen einer Schnittstelle einer Speicherschicht, um die Daten, die sequenziell aus der Zielnachrichtenwarteschlange gelesen werden, zur persistenten Datenform zu verarbeiten; und
Wiederholen des Aufrufens der Schnittstelle, um die Daten, die sequenziell aus der Zielnachrichtenwarteschlange gelesen werden, zur persistenten Datenform zu verarbeiten, in Reaktion darauf, dass das Speichern der Daten, die sequenziell aus der Zielnachrichtenwarteschlange gelesen werden, im persistenten Speichermedium fehlgeschlagen ist, bis die Daten, die sequenziell aus der Zielnachrichtenwarteschlange gelesen werden, erfolgreich zur persistenten Datenform verarbeitet wurden.

9. Verfahren nach Anspruch 7, wobei das Überwachen der entsprechenden Nachrichtenwarteschlange von allen Datenelementen Folgendes umfasst:

Aktivieren einer Überwachungsaufgabe für die Nachrichtenwarteschlange; und
Überwachen der Nachrichtenwarteschlange, die jedem Datenelement entspricht, über die Überwachungsaufgabe.

10. Verfahren nach Anspruch 2, das ferner Folgendes umfasst:
Reagieren auf eine Dienstanforderung durch Referenzieren von Daten, die im Cache gespeichert sind, bevor das Speichern der Daten, die in den Blockinformationen umfasst sind, im persistenten Speichermedium abgeschlossen ist.

11. Computerlesbares Medium, auf dem ein Computerprogramm gespeichert ist, wobei:
das Computerprogramm, wenn es von einem Prozessor ausgeführt wird, das Verfahren nach einem der Ansprüche 1 bis 10 implementiert.

12. Elektronische Vorrichtung, die Folgendes umfasst:

einen oder mehrere Prozessoren; und
eine Speichereinrichtung,, die dazu ausgelegt ist, ein oder mehrere Programme zu speichern, wobei:
das eine oder die mehreren Programme, wenn sie von dem einen oder den mehreren Prozessoren ausgeführt werden, den einen oder die mehreren Prozessoren dazu auslegen, das Verfahren nach einem der Ansprüche 1 bis 10 zu implementieren.

**Revendications**

1. Procédé de comptabilité asynchrone dans une chaîne de blocs, exécutable par un nœud de consensus dans la chaîne de blocs, dans lequel le procédé comprend :

après qu'un bloc a été vérifié par un mécanisme de consensus, l'écriture (S410) de chaque donnée comprise dans des informations de bloc correspondant au bloc dans une file d'attente de messages correspondant à ladite donnée ;

le démarrage (S420) d'une vérification d'un bloc suivant par le mécanisme de consensus après l'écriture de toutes les données dans les files d'attente de messages correspondantes ; et

la lecture (S430) de toutes les données à partir des files d'attente de messages correspondantes, et le stockage des données dans un support de stockage persistant pour un registre de chaîne de blocs ;

dans lequel le procédé comprend en outre :

l'écriture du bloc et d'un résultat d'exécution du bloc dans un journal après que le bloc a été vérifié par le mécanisme de consensus ; et

pour un bloc cible dans le journal, la suppression du bloc cible et d'un résultat d'exécution du bloc cible du journal après que toutes les données correspondant au bloc cible ont été traitées sous forme de données persistantes ; et

dans lequel

le procédé comprend en outre : l'obtention du bloc et du résultat d'exécution du bloc qui sont compris dans le journal après que le nœud de consensus a été redémarré ; et le traitement des données dans les informations de bloc correspondant au bloc et du résultat d'exécution qui sont obtenus du journal sous forme de données persistantes ; et

l'écriture de chaque donnée comprise dans les informations de bloc correspondant au bloc dans la file d'attente de messages correspondant à ladite donnée comprend : l'écriture de chaque donnée comprise dans les informations de bloc correspondant au bloc dans la file d'attente de messages correspondante après que le bloc et le résultat d'exécution du bloc ont été écrits avec succès dans le journal.

2. Procédé selon la revendication 1, comprenant en outre :
l'écriture de chaque donnée comprise dans les informations de bloc correspondant au bloc dans un cache correspondant à ladite donnée.

3. Procédé selon la revendication 1, dans lequel comprenant en outre :

la répétition de l'écriture du bloc et du résultat d'exécution du bloc dans le journal en réponse à l'échec de l'écriture du bloc et du résultat d'exécution dans le journal ; et

l'arrêt de la comptabilité sur le bloc et la transmission d'un message d'alerte en réponse à l'échec de l'écriture du bloc et du résultat d'exécution dans le journal pour un quantité définie de répétitions.

4. Procédé selon la revendication 2, comprenant en outre :
la suppression de toutes les données correspondant au bloc du cache après que toutes les données ont été traités sous forme de données persistantes.

5. Procédé selon la revendication 2, dans lequel l'écriture de chaque donnée comprise dans les informations de bloc correspondant au bloc dans la file d'attente de messages correspondant à ladite donnée et l'écriture de chaque donnée comprise dans les informations de bloc correspondant au bloc dans le cache correspondant à ladite donnée comprennent :

l'écriture d'un en-tête de bloc compris dans les informations de bloc dans une file d'attente et un cache correspondant à l'en-tête de bloc ;

l'écriture de données de transaction comprises dans les informations de bloc dans une file d'attente et un cache correspondant aux données de transaction ; et

l'écriture d'un ensemble d'écriture compris dans les informations de bloc dans une file d'attente et un cache correspondant à l'ensemble d'écriture ;

dans lequel les données de transaction comprennent une liste d'informations d'une transaction et un résultat de l'exécution de la transaction.

6. Procédé selon la revendication 2, dans lequel les données comprises dans les informations de bloc comprennent un en-tête de bloc, des données de transaction et un ensemble d'écriture ; et

l'écriture de chaque donnée comprise dans les informations de bloc correspondant au bloc dans le cache correspondant à ladite donnée comprend :

l'écriture de l'en-tête de bloc dans un cache correspondant à l'en-tête de bloc en utilisant une hauteur de bloc comme clé et les données d'en-tête de bloc comme valeur ;

l'écriture des données de transaction dans un cache correspondant aux données de transaction en utilisant un hachage de transaction comme clé et les données de transaction comme valeur ; et

l'écriture de l'ensemble d'écriture dans un cache correspondant à l'ensemble d'écriture en utilisant un nom de table et un index comme clé et les données écrites comme valeur.

7. Procédé selon la revendication 1, dans lequel l'écriture de chaque donnée comprise dans les informations de bloc correspondant au bloc dans la file d'attente de messages correspondant à ladite donnée comprend :

la surveillance des files d'attente de messages correspondantes de toutes les données, dans lequel une file d'attente de messages cible est l'une des files d'attente de messages ; et

la lecture séquentielle des données dans la file d'attente de messages cible à partir de la file d'attente de messages cible, et le traitement des données lues sous forme de données persistantes, en réponse au fait que la surveillance de la file d'attente de messages cible indique qu'elle comprend une donnée.

8. Procédé selon la revendication 7, dans lequel la lecture séquentielle des données dans la file d'attente de messages cible à partir de la file d'attente de messages cible et le stockage des données lues dans le support de stockage persistant comprennent :

l'invocation d'une interface d'une couche de stockage pour traiter les données qui sont lues séquentiellement à partir de la file d'attente de messages cible sous forme de données persistantes ; et

la répétition de l'invocation de l'interface pour traiter les données lues séquentiellement à partir de la file d'attente de messages cible sous forme de données persistantes, en réponse à l'échec du stockage des données lues séquentiellement à partir de la file d'attente de messages cible dans le support de stockage =- persistant, jusqu'à ce que les données lues séquentiellement à partir de la file d'attente de messages cible soient traitées avec succès sous forme de données persistantes.

9. Procédé selon la revendication 7, dans lequel la surveillance des files d'attente de messages correspondantes de toutes les données comprend :

l'activation d'une tâche de surveillance pour la file d'attente de messages ; et

la surveillance de la file d'attente de messages correspondant à chaque donnée par le biais de la tâche de surveillance.

10. Procédé selon la revendication 2, comprenant en outre :
la réponse à une demande de service en se référant aux données stockées dans le cache avant la fin du stockage des données comprises dans les informations de bloc dans le support de stockage persistant.

11. Support lisible par ordinateur, stockant un programme informatique, dans lequel :
le programme informatique, lorsqu'il est exécuté par un processeur, met en œuvre le procédé selon l'une des revendications 1 à 10.

12. Dispositif électronique, comprenant :

un ou plusieurs processeurs ; et

un appareil de stockage, configuré pour stocker un ou plusieurs programmes, dans lequel :

les un ou plusieurs programmes, lorsqu'il sont exécutés par les un ou plusieurs processeurs, configurent les un ou plusieurs processeurs à mettre en œuvre le procédé selon l'une des revendications 1 à 10.

Figure 1

Figure 2

1. Monitor global input information by a node

2. Verify the input information, store the input information in a memory pool, and update a Hash tree

3. Update a timestamp

4. Try different random numbers

Process of generating a new block

5. Calculate a feature value

6. Repeat 2 to 5 until find a qualified feature value

7. Pack the block

8. Broadcast the new block

9. Write into a block chain after verification of other nodes

Figure 3

| Write each piece of data comprised in block information corresponding to a block into a message queue corresponding to such piece of data, after the block is verified through a consensus mechanism | S410 |

| Start verifying on a next block through the consensus mechanism, after all pieces of the data are written into the corresponding message queues | S420 |

| Read all pieces of the data are read from the corresponding message queues, and store the data into a persistent storage medium for a blockchain ledger | S430 |

Figure 4

500

Apparatus for asynchronous
accounting in a blockchain

First processing unit  502

Second processing unit  504

Persistence processing unit  506

Figure 5

600

CPU  601

ROM  602

RAM  603

604

I/O interface  605

Input part  606

Output part  607

Storage part  608

Communication part  609

Drive  610

Removable medium  611

Figure 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 110995776 A